(19) Europäisches Patentamt
European Patent Office
Office européen des brevets

(11) **EP 4 160 135 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **22195243.5**

(22) Anmeldetag: **13.09.2022**

(51) Internationale Patentklassifikation (IPC):
***G01B 3/02*** *(2020.01)* ***G01N 1/28*** *(2006.01)*

(52) Gemeinsame Patentklassifikation (CPC):
**G01B 3/02**

(54) **SCHABLONE UND VERWENDUNG EINER SCHABLONE**

TEMPLATE AND USE OF A TEMPLATE

POCHOIR ET UTILISATION D'UN POCHOIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2021 DE 102021125625**

(43) Veröffentlichungstag der Anmeldung:
**05.04.2023 Patentblatt 2023/14**

(73) Patentinhaber: **Deere & Company
Moline, IL 61265 (US)**

(72) Erfinder: **Chassiboud, Jean-Loup
68163 Mannheim (DE)**

(74) Vertreter: **Stein, Stefan
John Deere GmbH & Co. KG
Global Intellectual Property Services
John-Deere-Straße 70
68163 Mannheim (DE)**

(56) Entgegenhaltungen:
**CN-U- 205 844 059        GB-A- 2 525 139
KR-B1- 101 149 503**

**Beschreibung**

Die Erfindung betrifft eine Schablone gemäss dem Oberbegriff des unabhängigen Anspruchs 1 und die Verwendung einer Schablone zur Bestimmung eines Streckungsverhältnisses einer Folienprobe einer einen Rundballen umspannenden Folie gemäss dem Oberbegriff des unabhängigen Anspruchs 7.

Eine Rundballenpresse kann Erntematerialien zu einem Rundballen formen und den geformten Rundballen mit einer Folie umwickeln. Dabei ist es wünschenswert, den Rundballen derart zu umwickeln, dass die Eigenschaften des Rundballens bewahrt werden und verhindert wird, dass sich der Rundballen zu einem weichen Rundballen unerwünschter Größe und Dichte ausdehnt. Ein zu locker gewickelter Rundballen führt nicht nur zu einer geringeren Qualität des Rundballens, sondern ist auch anfällig dafür, dass die Folie beim Aufnehmen und Transportieren hängen bleibt. Aufgrund der elastischen Eigenschaften der Folie ist es jedoch oft schwierig, einen Rundballen fest zu wickeln. Zum Beispiel kann sich der umhüllte Rundballen, wenn die Kräfte, insbesondere Zug- und/oder Druckkräfte, der Folie geringer sind als die Ausdehnungskräfte des geformten Rundballens, nach dem Umwickeln ausdehnen.

Unterschiedliche Arten von Folien können nachteilhafterweise unterschiedliche elastische Eigenschaften aufweisen. Darüber hinaus können die elastischen Eigenschaften, beispielsweise das Streckungsverhältnis und/oder die Elastizität einer Folie, von der Temperatur und/oder Feuchtigkeit der Feldfrüchte und/oder der verwendeten Rundballenpresse und/oder den Expansionseigenschaften der verarbeiteten Feldfrüchte und/oder der verwendeten Folie abhängig sein. Nachteilig ist somit, dass, sich die elastischen Eigenschaften der Folie verändern können, insbesondere auch während des Betriebs der Rundballenpresse.

Aus dem Stand der Technik ist es bekannt während des gesamten Umhüllungszyklus die Folie typischerweise mit einer konstanten Spannung der Folie aufzubringen, was zu Zuführproblemen und einer zu hohen oder zu niedrigen Spannung führt. Dabei wird von statischen und/oder gegebenen elastischen Eigenschaften der Folie ausgegangen, die nachteilhafterweise nicht den tatsächlichen elastischen Eigenschaften der Folie auf dem Feld und der Einwirkung der verschiedenen Erntegüter gerecht wird. Dadurch kann die Folie beim Wickelvorgang oder auch der mit der Folie umwickelte Rundballen beschädigt werden. Außerdem können bekannte Rundballenpressen nicht auf die tatsächlichen und aktuellen Streckungsverhältnisse oder elastischen Eigenschaften der Folie angepasst werden, da keine Möglichkeiten existieren die tatsächlichen und aktuellen elastischen Eigenschaften bzw. die tatsächliche und aktuelle Elastizität und/oder das tatsächliche und aktuelle Streckungsverhältnis der Folie zu messen. Die CN 205 844 059 U und KR 101 149 503 B1 offenbaren tragbare Dehnungsmessgeräte.

Der vorliegenden Erfindung liegt daher die Aufgabe zugrunde, eine Schablone und die Verwendung einer Schablone zur Bestimmung eines Streckungsverhältnisses einer Folienprobe einer einen Rundballen umspannenden Folie vorzuschlagen, durch welche die vorgenannten Probleme überwunden werden. Insbesondere sollen eine Schablone und die Verwendung einer Schablone vorgeschlagen werden, mit welchen das Streckungsverhältnis bzw. die Elastizität der Folie bestimmbar ist, sodass der Betrieb der Rundballenpresse und das Wickeln der Rundballen verbessert werden kann.

Diese Aufgabe wird durch eine Schablone mit den Merkmalen des Anspruchs 1 und eine Verwendung der Schablone mit den Merkmalen des Anspruchs 8 gelöst. Die abhängigen Ansprüche beziehen sich auf besonders vorteilhafte Ausführungsformen der Erfindung.

Erfindungsgemäß wird eine Schablone zur Bestimmung eines Streckungsverhältnisses einer Folienprobe einer einen Rundballen umspannenden Folie vorgeschlagen. Die Schablone umfasst einen Schablonenkörper, welcher eine Auflageseite und eine gegenüber angeordnete Arbeitsseite oder Anzeigeseite aufweist, sowie eine Umrisskante des Schablonenkörpers zur Bemessung eines Umfangs, insbesondere eines Umrisses und/oder einer Grösse, der Folienprobe. Darüber hinaus umfasst die Schablone zwei in dem Schablonenkörper ausgebildete Schlitze, bevorzugt Ausnehmungen, besonders bevorzugt linienförmige Ausnehmungen, zum Aufbringen von Markierungen, bevorzugt von zwei Markierung, besonders bevorzugt genau zwei Markierungen, auf die Folie. Die zwei Schlitze sind in einem ersten Abstand parallel zueinander angeordnet sind. Die Schablone, insbesondere der Schablonenkörper, umfasst eine auf der Arbeitsseite des Schablonenkörpers angeordnete, insbesondere aufgebrachte, Anlagemarkierung. Ausserdem ist auf der Arbeitsseite in einem vorgegebenen Abstand zur Anlagemarkierung eine Skala zum Anzeigen des Streckungsverhältnisses der Folienprobe angeordnet, insbesondere aufgebracht. Einer der Schlitze und die Anlagemarkierung liegen auf einer Geraden. Im Speziellen können die erste Ausnehmung und die Anlagemarkierung auf einer Geraden, also einer gemeinsamen Geraden liegen. Vorteilhafterweise kann so auf die Schablone konstruktiv einfach ausgestaltet werden, da dadurch die Bestimmung des Streckungsverhältnisses auf einfache Art und Weise bestimmt werden kann.

Der Schablonenkörper, insbesondere auch Grundkörper, der Schablone kann eine plattenförmige Geometrie aufweisen. Der Schablonenkörper kann rechteckig oder quadratisch sein. Ebenso kann der Schablonenkörper flach und/oder zweidimensional sein. Die Auflageseite kann bei der Verwendung der Schablone auf den mit der Folie umspannten Rundballen aufgelegt werden, um die Folie zu markieren und eine Folienprobe zu entnehmen. Die Auflageseite und die Arbeits- bzw. Anzeigeseite können zwei parallele Flächen sein, die auf jeweils gegenüber angeordneten Seiten des Schablonenkörpers ausgebildet sein können. Die in dem Schablonenkörper ausgebildete Schlitze können linienförmig sein. Die Schlitze können als Ausnehmungen ausgebildet sein, insbesondere als linienförmige Öffnungen oder Ausnehmungen von der Auflageseite zur Arbeitsseite ausgebildet sein. Wenn die Schablone an der Folie anliegt können beispielsweise mit einem Stift Markierungen, insbesondere zwei Markierung, auf die um den Rundballen gespannte Folie, insbesondere die zu entnehmende Folienprobe, aufgebracht werden. Die zwei Schlitze können in einem ersten Abstand parallel zueinander angeordnet. Der erste Abstand kann ein vorgegebener Abstand, insbesondere ein fest vorgegebener Abstand, zwischen den zwei Markierungen auf der Folie bzw. der Folienprobe im gespannten Zustand sein. Der erste Abstand kann 15 bis 25 cm, bevorzugt 18 bis 22 cm, besonders bevorzugt 20 cm betragen.

Liegt die Auflageseite bei der Verwendung der Schablone auf den mit der Folie umspannten Rundballen auf, kann die Grösse und/oder der Umriss der Folienprobe mit der Umrisskante des Schablonenkörpers bemessbar und/oder entnehmbar sein. Dazu kann die Folie zur Entnahme der Folienprobe entlang der Umrisskante des Schablonenkörpers aufgetrennt werden. Im Anschluss kann die Folienprobe entnommen werden.

Anlagemarkierung und Skala können auf die Arbeitsseite aufgebracht, insbesondere eingraviert oder aufgedruckt sein. Die Skala kann einen oder mehrere Teilstriche umfassen, an welchen das Streckungsverhältnis bestimmbar, insbesondere ablesbar ist. Ausserdem kann die Anlagemarkierung entlang einer verlängerten Geraden mit einem der zwei Schlitze liegen. Um die Folienprobe an der Schablone an der vorgesehenen Stelle anlegen zu können, können die zwei Markierungen auf der Folienprobe an die Anlagemarkierung und Skala auf einfache Art und Weise angelegt werden. Dazu kann durch einfache Sichtkontrolle eine der zwei Markierungen mit der Anlagemarkierung zur Deckung gebracht werden oder in Richtung einer Verlängerung oder verlängerten Geraden der Anlagemarkierung an diese angelegt werden. Die andere der beiden Markierungen kann durch einfache Sichtkontrolle mit einem der Teilstriche der Skala zur Deckung gebracht werden oder in Richtung einer Verlängerung eines der Teilstriche der Skala an diesen angelegt werden. Das erleichtert die Positionierung und das Ablesen der Folienprobe. Die Skala kann in einem vorgegebenen Abstand zur Anlagemarkierung angeordnet sein. Ebenso kann jedem der Teilstriche der Skala ein Abstand, insbesondere ein aufsteigender oder abnehmender Abstand, zur Anlagemarkierung zugeordnet sein. Anhand des dem jeweiligen Teilstrich zugeordneten Abstand zur Anlagemarkierung kann ein zweiter Abstand der zwei Markierungen der Folienprobe bzw. Folie im entspannten Zustand bestimmbar sein. Im entspannten Zustand der Folie weisen die zwei Markierungen also den zweiten Abstand auf.

Mittels anlegen der Folienprobe im entspannten Zustand kann insbesondere mit dem ersten und zweiten Abstand der zwei Markierungen, das Streckungsverhältnis, insbesondere mit an der Skala angeordneten Werten und/oder Einheiten des Streckungsverhältnisses, bestimmbar sein, insbesondere direkt ablesbar sein. Die Werte und/oder Einheiten können bevorzugt auf der Arbeitsseite des Schablonenkörpers an der Skala angeordnet, bevorzugt eingraviert oder aufgedruckt sein.

Im Speziellen kann also aus einem Verhältnis des ersten Abstands, also des Abstands der zwei Markierung der gespannten Folie bzw. Folienprobe, zum zweiten Abstand, also des Abstands der zwei Markierungen der entspannten Folienprobe, das Streckungsverhältnis bestimmbar sein. Dadurch kann das Streckungsverhältnis direkt an jedem Teilstrich ablesbar sein. Im Speziellen ergibt sich das Streckungsverhältnis in Prozent wie folgt:

$$S = \frac{d_1 - d_2}{d_2} \times 100$$

Mit S = *Streckungsverhältnis* und $d_1$ = 1.*Abstand* und $d_2$ = 2.*Abstand*

Mit anderen Worten, die Schablone kann derart ausgestaltet sein, dass die Schablone mit der Anlegeseite an die den Rundballen umspannende Folie anlegbar ist und die gespannte Folie mit den zwei Schlitzen, insbesondere einer ersten und zweiten Ausnehmung, mit zwei Markierungen, insbesondere einer ersten und zweiten Referenzlinie, markierbar ist. Die Folie kann also im gespannten Zustand mit der ersten Referenzlinie über oder mit der ersten Ausnehmung und mit der zweiten Referenzlinie über oder mit der zweiten Ausnehmung markierbar sein. Dabei kann die zweite Ausnehmung zur ersten Ausnehmung parallel sein. Ausserdem weisen die erste und zweite Ausnehmung den ersten Abstand, insbesondere einen ersten vorgegebenen Abstand auf. Der Umriss bzw. die Aussenkontur des Schablonenkörpers kann hierbei als Führungshilfe zur Festlegung des Umfangs und/oder der Grösse der Folienprobe und zur Entnahme der Folienprobe im gespannten Zustand ausgestaltet sein, wenn die Auflageseite auf der Folie aufliegt. Die Teilstriche der Skala können in regelmässigen Abständen in einer Dimension angeordnet sein. Ausserdem können die Teilstriche parallel zur ersten Ausnehmung sein. Die Folienprobe kann im entspannten Zustand, insbesondere also nach der Entnahme und nach einer Entspannungszeit, derart mit der ersten Referenzlinie an die Anlagemarkierung und mit der zweiten Referenzlinie an die Skala zur Bestimmung, insbesondere zum Ablesen und/oder zur Erfassung, anlegbar sein, bevorzugt an einen der Teilstriche der Skala anlegbar sein, sodass ein Streckungsverhältnis der Folienprobe mit der Skala bestimmbar, insbesondere direkt ablesbar ist. Im entspannten Zustand der Folie weisen die erste und zweite Referenzlinien einen zweiten Abstand auf. Damit kann das Streckungsverhältnis der Folienprobe bestimmbar sein (siehe obige Formel). Das Streckungsverhältnis kann insbesondere mit den an der Skala angeordneten Werten und/oder Einheiten des Streckungsverhältnisses bestimmbar, insbesondere direkt ablesbar sein.

Wesentlich für die Erfindung ist, dass mit der Schablone das Streckungsverhältnis bzw. die Elastizität der Folie auf einfache Art und Weise bestimmbar ist. Vor Vorteil kann dadurch der Betrieb der Rundballenpresse und das Wickeln der Rundballen verbessert werden, indem die Spannung, mit welcher die Folie auf den Rundballen aufgebracht wird, an der Rundballenpresse einstellbar ist.

In Ausgestaltung der Erfindung umfasst die Skala einen oder mehrere Teilstriche. Der oder die Teilstriche der Skala sind parallel zur Anlagemarkierung angeordnet und/oder die Skala ist linear eingeteilt. Die zwei Markierungen weisen in entspanntem Zustand der Folienprobe einen zweiten Abstand auf und sind derart an die Anlegemarkierung und einen Teilstrich der Skala anlegbar, dass das Streckungsverhältnisses der Folienprobe ermittelbar, insbesondere ablesbar ist. Jeder Teilstrich kann einen vorgegebenen Abstand, bevorzugt einen zweiten Abstand, besonders bevorzugt einen vorgegebenen zweiten Abstand, zur Anlagemarkierung aufweisen. Mit dem Verhältnis aus erstem Abstand und dem bei Anlegen der Folienprobe im entspannten Zustand bestimmbaren Abstand der zwei Markierungen zwischen Teilstrich und Anlagemarkierung kann das Streckungsverhältnis der Folienprobe bzw. der Folie bestimmt werden. Vorteilhafterweise kann so auf weitere Hilfsmittel und Messungen verzichtet werden und das Streckungsverhältnis kann auf einfache Art und Weise bestimmbar sein.

In Ausgestaltung der Erfindung weisen die Teilstriche der Skala Werte und/oder eine Einheit auf. Die Teilstriche können also mit Werten und/oder der Einheit beschriftet sein. Die Werte und/oder Einheit können auf den Schablonenkörper aufgedruckt oder in den Schablonenkörper eingraviert sein. Die Werte des Streckungsverhältnisses können zwischen 5 und 50 %, bevorzugt zwischen 10 und 40 %, besonders bevorzugt zwischen 10 und 39 % liegen. Die Einheit des Streckungsverhältnisses kann in Prozent angegeben werden.

In einer vorteilhaften Weiterbildung ist auf der Arbeitsseite eine Arbeitsanweisung zur Verwendung der Schablone angeordnet, bevorzugt aufgebracht, besonders bevorzugt in den Schablonenkörper eingraviert oder auf den Schablonenkörper aufgedruckt. In einem konstruktiv vorteilhaften Ausführungsbeispiel ist die Schablone einstückig ausgebildet. Die Arbeitsanweisung kann die Arbeitsschritte zur Bestimmung des Streckungsverhältnisses in bildlicher Form und/oder als Text umfassen. Dadurch wird vorteilhafterweise die Arbeitsweise mit der Schablone und/oder die Verwendung bzw. die Bedienung der Schablone vereinfacht.

In Ausgestaltung der Erfindung ist der Schablonenkörper aus Papier, bevorzugt Papier mit hohem Gewicht, besonders bevorzugt einem Papier mit einem Gewicht grösser 100 g/qm, und/oder Kunststoff und/oder Metall und/oder irgendeinem festen Material ausgebildet sein.

Der Schablonenkörper kann ebenso eine transparente Folie umfassen. Von Vorteil kann dadurch die schnelle Abnutzung der Schablone im täglichen Gebrauch reduziert werden.

Die Erfindung betrifft weiter die Verwendung einer Schablone, insbesondere nach mindestens einem der Ansprüche 1 bis 7, zur Bestimmung eines Streckungsverhältnisses einer Folienprobe einer einen Rundballen umspannenden Folie. Die Verwendung erfolgt hierbei wie folgt. Die Schablone wird auf einen Bereich der Folie aufgelegt, insbesondere in Umfangsrichtung der Folie auf dem Rundballen. Die Markierungen, insbesondere die genau zwei Markierungen, werden entlang der Schlitze auf die Folie aufgebracht. Dabei kann die Folie beispielsweise mit einem Stift oder Marker über oder durch die Schlitze markiert werden. Die Folie wird zur Entnahme der Folienprobe entlang der Umrisskante des Schablonenkörpers aufgetrennt und die Folienprobe entnommen. Zum Auftrennen kann ein Schneideelement, beispielsweise ein Messer, verwendet werden. Das Schneideelement kann entlang der Umrisskante zum Schneiden der Folie geführt werden, wobei die Umrisskante als Führungshilfe verwendet werden kann. Die entnommene Folienprobe wird einer Entspannungszeit ausgesetzt. Die Entspannungszeit kann in einem Zeitintervall von bevorzugt 30 Sekunden bis 10 Minuten, besonders bevorzugt 1 Minute bis 5 Minuten, im Speziellen 3 Minuten liegen. Die Folienprobe mit den zwei Markierungen wird, insbesondere nach der Entspannungszeit, an die Anlagemarkierung und Skala der Schablone zum Ermitteln, insbesondere Bestimmen und/oder Ablesen, des Streckungsverhältnisses angelegt. Dazu kann eine der zwei Markierungen an die Anlagemarkierung angelegt werden. Die andere der zwei Markierung kann an einem Teilstrich der Skala angelegt und das Streckungsverhältnis bestimmt werden. Die erfindungsgemässe Verwendung weist die oben beschriebenen Vorteile der erfindungsgemässen Schablone auf.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:

Fig. 1A        eine schematische Darstellung eines ersten Ausführungsbeispiels einer erfindungsgemässen Schablone, und

Fig. 1B        eine schematische Darstellung des ersten Ausführungsbeispiels der erfindungsgemässen Schablone mit angelegter Folienprobe, und

Fig. 2        eine schematische Darstellung eines zweiten Ausführungsbeispiels einer erfindungsgemässen Schablone, und

Fig. 3A bis Fig. 3E        eine schematische Darstellung eines ersten Ausführungsbeispiels der erfindungsgemässen Verwendung der Schablone.

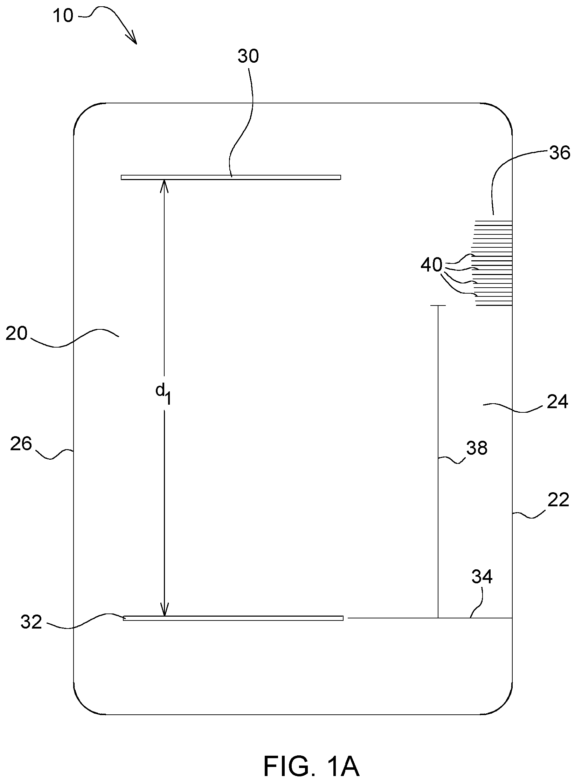

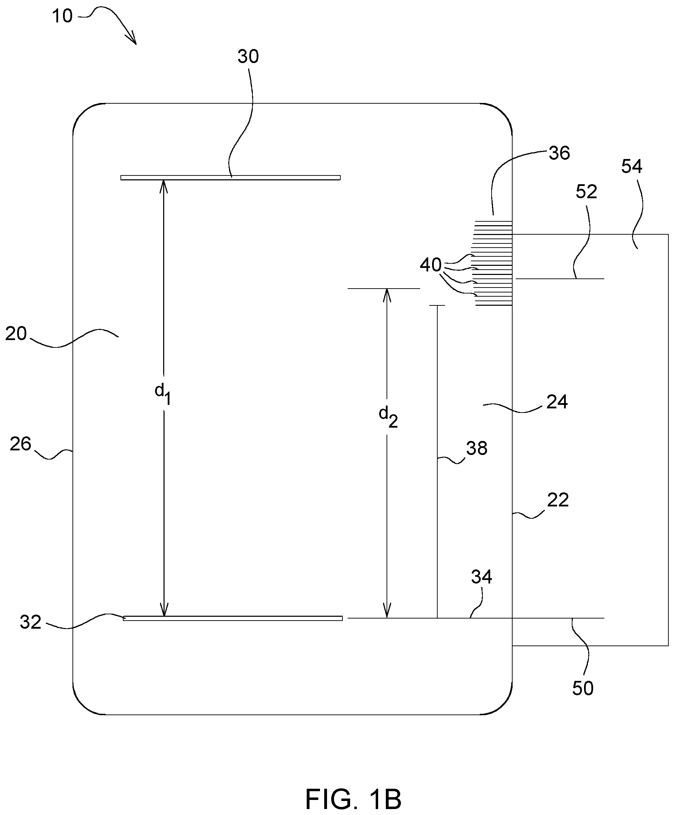

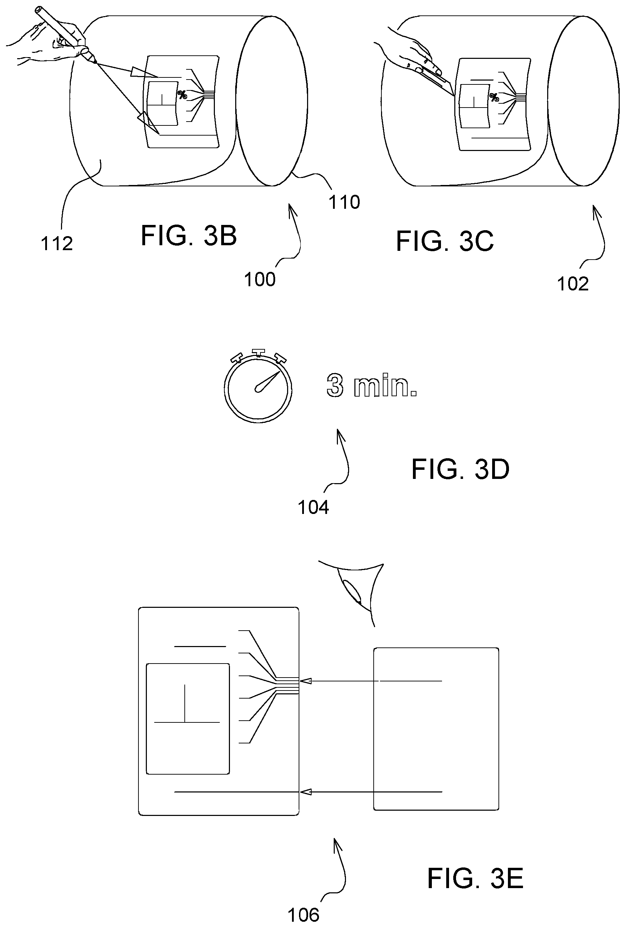

Figur 1a zeigt eine schematische Darstellung eines ersten Ausführungsbeispiels einer erfindungsgemässen Schablone 10 zur Bestimmung eines Streckungsverhältnisses einer Folienprobe (siehe Figur 1b, Bezugszeichen 54) einer einen Rundballen (siehe Figur 3b, Bezugszeichen 110) umspannenden Folie (siehe Figur 3b, Bezugszeichen 112). Die Schablone 10 umfasst einen Schablonenkörper 20, welcher eine Auflageseite 22 und eine gegenüber angeordnete Arbeitsseite 24 aufweist. Die Schablone 10, insbesondere der Schablonenkörper 20, ist einstückig ausgebildet. Darüber hinaus ist zur Bemessung eines Umfangs der Folienprobe 54 eine Umrisskante 26 des Schablonenkörpers 20 vorgesehen. Im Schablonenkörper 20 sind zwei Schlitze 30, 32 bzw. eine erste und zweite Ausnehmung, insbesondere zwei linienförmig Ausnehmungen, zum Aufbringen von Markierungen, insbesondere von zwei Markierungen 50, 52, auf die Folie 112 oder die Folienprobe 54 ausgebildet, wobei die zwei Schlitze 30, 32 in einem ersten Abstand $d_1$ parallel zueinander angeordnet sind. Auf der Arbeitsseite 24 des Schablonenkörpers 20 ist eine Anlagemarkierung 34 angeordnet. Einer der Schlitze 32 und die Anlagemarkierung 34 können dabei auf einer gemeinsamen Geraden liegen. Ebenso ist eine Skala 36 zum Anzeigen des Streckungsverhältnisses der Folienprobe 54 auf der Arbeitsseite 24 des Schablonenkörpers 20 in einem vorgegebenen Abstand 38 zur Anlagemarkierung 34 angeordnet, insbesondere positioniert. Die Skala 36 umfasst einen oder mehrere Teilstriche 40. Die Teilstriche 40 sind alle parallel zur Anlagemarkierung 34 angeordnet. Ausserdem ist die Skala 36 linear eingeteilt, also die Teilstriche 40 in einem gleichen Abstand zueinander angeordnet. Der Abstand 38 zur Anlagemarkierung 34 kann dabei ausgehende von dem der Anlagemarkierung 34 nächsten Teilstrich für jeden nächsten Teilstrich um den gleichen Abstand zunehmen.

Figur 1b zeigt eine weitere schematische Darstellung des ersten Ausführungsbeispiels der erfindungsgemässen Schablone 10 mit angelegter Folienprobe 54. Die in Figur 1b gezeigte Schablone 10 entspricht im Wesentlichen der in Figur 1a gezeigten Schablone 10, sodass im Folgenden lediglich auf Details und/oder Unterschiede eingegangen wird. Die Markierungen 50, 52 der Folienprobe 54, insbesondere auf der Folienprobe 54, können derart in einem zweiten Abstand $d_2$ an die Anlegemarkierung 34 und einen Teilstrich 40 der Skala 36 anlegbar sein, dass das Streckungsverhältniss der Folienprobe 54 ermittelbar, insbesondere ablesbar ist.

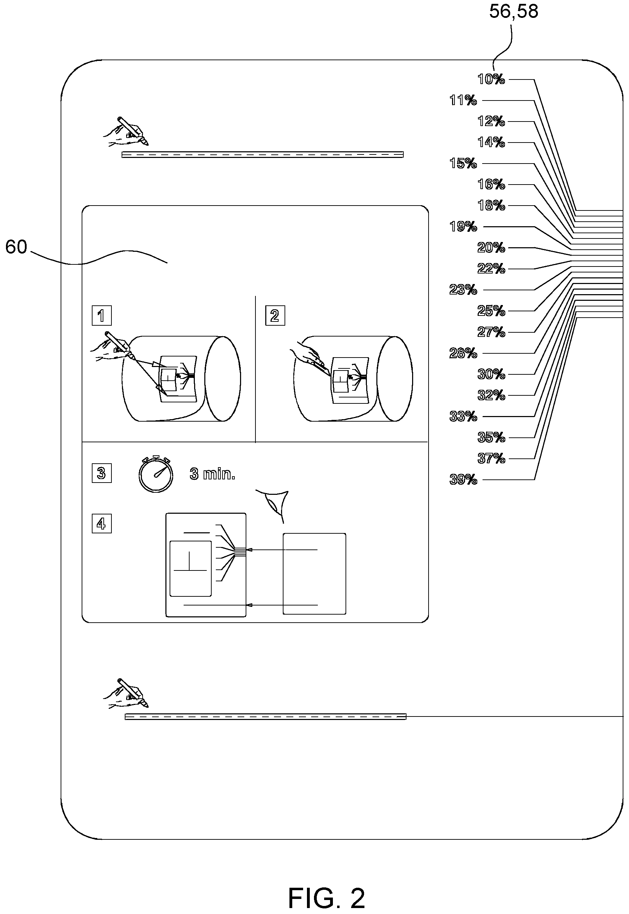

Figur 2 zeigt eine schematische Darstellung eines zweiten Ausführungsbeispiels der erfindungsgemässen Schablone 10. Die in Figur 2 gezeigte Schablone 10 entspricht im Wesentlichen der in Figur 1 gezeigten Schablone 10, sodass im Folgenden lediglich auf Details und/oder Unterschiede eingegangen wird. Die Teilstriche 40 der Skala 36 weisen Werte 56 und/oder eine Einheit 58 auf. Die Werte 56 entsprechend dem Streckungsverhältnis und die Einheit ist ein in Prozent angegebener Wert. Darüber hinaus ist auf der Arbeitsseite 24 eine Arbeitsanweisung 60 zur Verwendung der Schablone 10 angeordnet.

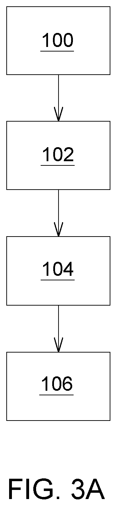

Die Figuren 3A bis 3E zeigen schematische Darstellungen eines ersten Ausführungsbeispiels der erfindungsgemässen Verwendung der Schablone 10 zur Bestimmung eines Streckungsverhältnisses einer Folienprobe 54 einer einen Rundballen umspannenden Folie 112. Die in den Figuren 3A bis 3E gezeigte Schablone 10 entspricht im Wesentlichen der in den Figuren 1a, 1b und 2 gezeigten Schablone 10, sodass im Folgenden lediglich auf Details und/oder Unterschiede eingegangen wird. Dabei zeigt Figur 3A den gesamten Ablauf der Verwendung und die Figuren 3B bis 3E die einzelnen Schritte der Verwendung. Figur 3A zeigt eine schematische Darstellung, insbesondere einen Ablauf, eines ersten Ausführungsbeispiels der erfindungsgemässen Verwendung der Schablone 10. In einem ersten Schritt 100 (siehe auch Figur 3B) wird die die Schablone 10 auf die den Rundballen umspannende Folie 112, insbesondere mit der Auflageseite 22 auf die Folie 112, aufgelegt. Die Schablone 10 wird bevorzugt in Umfangsrichtung der den Rundballen umspannenden Folie 112 aufgelegt. Entlang der Schlitze 30, 32 werden zwei Markierungen 50, 52 auf die Folie 112 aufgebracht (siehe Figur 3B, Bezugszeichen 110). Dazu kann die Folie 112 mit einem Stift oder einem andersartig geeigneten Markierungsvorrichtung durch oder über die zwei Schlitze 30, 32 markiert werden. Im Anschluss kann die Schablone 10 mit der Auflageseite 22 auf der Folie 112 liegen bleiben. In einem zweiten Schritt 102 (siehe auch Figur 3C) wird, zur Entnahme der Folienprobe 54, die Folie 112 entlang der Umrisskante 26 des Schablonenkörpers 20 aufgetrennt und die Folienprobe 54 entnommen. Wahlweise können der erste und zweite Schritt 100, 102, Markierung und Entnahme der Folienprobe 54, auch umgekehrt oder gleichzeitig ausgeführt werden. Nach der Entnahme der Folienprobe 54 wird in einem dritten Schritt 104 (siehe auch Figur 3D) die entnommene Folienprobe 54 einer Entspannungszeit ausgesetzt. Die Entspannungszeit kann in einem Zeitintervall von bevorzugt 30 Sekunden bis 10 Minuten, besonders bevorzugt 1 Minute bis 5 Minuten, im Speziellen 3 Minuten liegen. In einem vierten Schritt 106 (siehe auch Figur 3E) wird die Folienprobe 54 mit den Markierungen an die Anlagemarkierung 34 und Skala 36, insbesondere einem der Teilstriche 40, zum Ermitteln, also insbesondere Ablesen, des Streckungsverhältnisses angelegt.

**Patentansprüche**

1. Schablone zur Bestimmung eines Streckungsverhältnisses einer Folienprobe (54) einer einen Rundballen (110) umspannenden Folie (112), umfassend:

   einen Schablonenkörper (20), welcher eine Auflageseite (22) und eine gegenüber angeordnete Arbeitsseite (24) aufweist,
   eine Umrisskante (26) des Schablonenkörpers (20) zur Bemessung eines Umfangs der Folienprobe (54),
   zwei in dem Schablonenkörper (20) ausgebildete Schlitze (30, 32) zum Aufbringen von Markierungen auf die Folie (112), wobei die zwei Schlitze (30, 32) in einem ersten Abstand ($d_1$) parallel zueinander angeordnet sind,
   einer auf der Arbeitsseite (24) des Schablonenkörpers (20) angeordneten Anlagemarkierung (34),
   und einer auf der Arbeitsseite (24) in einem vorgegebenen Abstand (38) zur Anlagemarkierung (34) angeordneten Skala (36) zum Anzeigen des Streckungsverhältnisses der Folienprobe (54),
   **dadurch gekennzeichnet, dass** einer der Schlitze (32) und die Anlagemarkierung (34) auf einer Geraden liegen.

2. Schablone nach Anspruch 1, **dadurch gekennzeichnet, dass** die Skala (36) einen oder mehrere Teilstriche (40) umfasst, und/oder der oder die Teilstriche (40) der Skala (36) parallel zur Anlagemarkierung (34) angeordnet sind, und/oder die Skala (36) linear eingeteilt ist.

3. Schablone nach mindestens einem der Ansprüche 1 bis 2, **dadurch gekennzeichnet, dass** die Teilstriche (40) der Skala (36) Werte (56) und/oder eine Einheit (58) aufweisen.

4. Schablone nach mindestens einem der Ansprüche 1 bis 3, **dadurch gekennzeichnet, dass** auf der Arbeitsseite (24) eine Arbeitsanweisung (60) zur Verwendung der Schablone (10) angeordnet ist.

5. Schablone nach mindestens einem der Ansprüche 1 bis 4, **dadurch gekennzeichnet, dass** die Schablone (10) einstückig ausgebildet ist.

6. Schablone nach mindestens einem der Ansprüche 1 bis 5, **dadurch gekennzeichnet, dass** der Schablonenkörper (20) aus Papier und/oder Kunststoff und/oder Metall ausgebildet ist.

7. Verwendung einer Schablone nach mindestens einem der Ansprüche 1 bis 6 zur Bestimmung eines Streckungsverhältnisses einer Folienprobe (54) einer einen Rundballen (110) umspannenden Folie (112),

   wobei die Schablone (10) auf einen Bereich der Folie (112) aufgelegt wird (100),
   Markierungen (50, 52) entlang der Schlitze (30, 32) auf die Folie (112) aufgebracht werden (100),
   die Folie (112) zur Entnahme der Folienprobe (54) entlang der Umrisskante (26) des Schablonenkörpers (20) aufgetrennt und die Folienprobe (54) entnommen wird (102),
   die entnommene Folienprobe (54) einer Entspannungszeit ausgesetzt wird (104),
   und die Folienprobe (54) mit den Markierungen (50, 52) an die Anlagemarkierung (34) und Skala (36) zum Ermitteln des Streckungsverhältnisses angelegt wird.

**Claims**

1. Template for determining a stretching ratio of a film sample (54) of a film (112) spanning a round bale (110), comprising:

   a template body (20) which has a supporting side (22) and an oppositely arranged working side (24),
   an outline edge (26) of the template body (20) for measuring a circumference of the film sample (54),
   two slots (30, 32) formed in the template body (20) for applying markings to the film (112), the two slots (30, 32) being arranged parallel to each other at a first distance ($d_1$),
   a contact marking (34) arranged on the working side (24) of the template body (20),
   and a scale (36), which is arranged on the working side (24) at a predetermined distance (38) from the contact marking (34), for displaying the stretching ratio of the film sample (54),
   **characterized in that** one of the slots (32) and the contact marking (34) lie on a straight line.

2. Template according to Claim 1, **characterized in that** the scale (36) comprises one or more graduation marks (40), and/or the graduation mark or the graduation marks (40) of the scale (36) is or are arranged parallel to the contact marking (34), and/or the scale (36) is divided linearly.

3. Template according to at least one of Claims 1 and 2, **characterized in that** the graduation marks (40) of the scale (36) comprise values (56) and/or a unit (58).

4. Template according to at least one of Claims 1 to 3, **characterized in that** a working instruction (60) for using the template (10) is arranged on the working side (24).

5. Template according to at least one of Claims 1 to 4, **characterized in that** the template (10) is configured as a single piece.

6. Template according to at least one of Claims 1 to 5, **characterized in that** the template body (20) is formed from paper and/or plastic and/or metal.

7. Use of a template according to at least one of Claims 1 to 6 for determining a stretching ratio of a film sample (54) of a film (112) spanning a round bale (110),

   wherein the template (10) is placed (100) onto a region of the film (112),
   markings (50, 52) are applied (100) along the slots (30, 32) to the film (112),
   the film (112) is severed along the outline edge (26) of the template body (20) for removal of the film sample (54) and the film sample (54) is removed (102),
   the removed film sample (54) is subjected (104) to a relaxation period,
   and the film sample (54) is applied with the markings (50, 52) to the contact marking (34) and scale (36) to ascertain the stretching ratio.

**Revendications**

1. Gabarit pour déterminer un rapport d'allongement d'un échantillon de film (54) d'un film (112) enveloppant une balle ronde (110), comprenant :

   un corps de gabarit (20) qui présente un côté de pose (22) et un côté de travail (24) agencé à l'opposé,
   un bord de contour (26) du corps de gabarit (20) pour mesurer une circonférence de l'échantillon de film (54), deux fentes (30, 32) réalisées dans le corps de gabarit (20) pour appliquer des repères sur le film (112), les deux fentes (30, 32) étant agencées parallèlement l'une à l'autre à une première distance ($d_1$),
   un repère d'appui (34) agencé sur le côté de travail (24) du corps de gabarit (20),
   et une échelle (36) agencée sur le côté de travail (24) à une distance prédéfinie (38) du repère d'appui (34) pour indiquer le rapport d'allongement de l'échantillon de film (54),
**caractérisé en ce que** l'une des fentes (32) et le repère d'appui (34) sont situés sur une ligne droite.

2. Gabarit selon la revendication 1, **caractérisé en ce que** l'échelle (36) comprend une ou plusieurs graduations (40) et/ou la ou les graduations (40) de l'échelle (36) sont agencées parallèlement au repère d'appui (34) et/ou l'échelle (36) est divisée de manière linéaire.

3. Gabarit selon au moins l'une quelconque des revendications 1 à 2, **caractérisé en ce que** les graduations (40) de l'échelle (36) présentent des valeurs (56) et/ou une unité (58).

4. Gabarit selon au moins l'une quelconque des revendications 1 à 3, **caractérisé en ce qu'**une instruction de travail (60) pour l'utilisation du gabarit (10) est agencée sur le côté de travail (24).

5. Gabarit selon au moins l'une quelconque des revendications 1 à 4, **caractérisé en ce que** le gabarit (10) est réalisé d'un seul tenant.

6. Gabarit selon au moins l'une quelconque des revendications 1 à 5, **caractérisé en ce que** le corps de gabarit (20) est réalisé en papier et/ou en matière plastique et/ou en métal.

7. Utilisation d'un gabarit selon au moins l'une quelconque des revendications 1 à 6 pour déterminer un rapport d'allongement d'un échantillon de film (54) d'un film (112) enveloppant une balle ronde (110),

   le gabarit (10) étant posé (100) sur une zone du film (112),
   des repères (50, 52) étant appliqués (100) sur le film (112) le long des fentes (30, 32),
   le film (112) étant découpé le long du bord de contour (26) du corps de gabarit (20) afin de prélever l'échantillon de film (54), et l'échantillon de film (54) étant prélevé (102),
   l'échantillon de film prélevé (54) étant soumis à un temps de relaxation (104),
   et l'échantillon de film (54) avec les repères (50, 52) étant mis en appui contre le repère d'appui (34) et l'échelle (36) afin de déterminer le rapport d'allongement.

FIG. 1A

FIG. 1B

FIG. 2

FIG. 3A

FIG. 3B

112

110

FIG. 3C

100

102

3 min.

FIG. 3D

104

FIG. 3E

106

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 205844059 U

- KR 101149503 B1